# EUROPEAN PATENT APPLICATION

(11) **EP 3 425 002 A1**
(43) Date of publication of application: **09.01.2019**
(21) Application number: 17759663.2
(22) Date of filing: 15.02.2017
(51) Int. Cl.: C08L 27/12, C08J 3/24, C08K 3/04, C08K 7/06, C09K 3/10

(54) **FLUORORUBBER COMPOSITION AND CROSSLINKED FLUORORUBBER**

(30) Priority: 01.03.2016 JP 2016039352
(71) Applicant: NOK Corporation, Minato-ku Tokyo 105-8585 (JP)
(72) Inventor: KUNIEDA Kenichi, Fujisawa-shi Kanagawa 251-0042 (JP); FURUKAWA Tomonori, Fujisawa-shi Kanagawa 251-0042 (JP)
(74) Representative: TBK
(86) International application number: PCT/JP2017/005558
(87) International publication number: WO 2017/150192

(57) **Abstract**

It is an object of the present invention to provide a fluororubber composition and a crosslinked fluororubber product excellent in organic acid resistance, and this object is characterized by comprising substantially no oxide of a divalent metal, hydroxide of a divalent metal, or carbonate of a divalent metal, and comprising graphite having an average particle diameter of 4 µm to 20 µm or a pitch-based carbon fiber having an average fiber length of 0.04 to 0.15 mm, as a filler in a peroxide-crosslinkable fluororubber. Preferably, this object is achieved by comprising the graphite in the range of 5 phr by weight to 50 phr by weight, or comprising the pitch-based carbon fiber in the range of 5 phr by weight to 50 phr by weight, per 100 phr by weight of the fluororubber.

## Description

### TECHNICAL FIELD

The present invention relates to a fluororubber composition and a crosslinked fluororubber product and particularly to a fluororubber composition and a crosslinked fluororubber product excellent in organic acid resistance.

### BACKGROUND

A fluororubber composition is excellent in oil resistance and fuel resistance and is used as a sealing material for oil sealing, O-rings, packings, and the like in a wide range of fields of automobiles, industrial machines, and the like.

In recent years, due to an increase in awareness of global warming, an increase in the utilization of bio-derived diesel fuel (biodiesel) as a measure against the warming has been expected.

### PRIOR ART DOCUMENT

### PATENT DOCUMENT

Patent Document 1: JP-A-2015-124640

### SUMMARY OF THE INVENTION

### PROBLEM TO BE SOLVED BY THE INVENTION

It is known that biodiesel generates organic acids due to deterioration, and the influence on sealing parts is a concern.

In addition, in the fields of automobiles and the like, for the purpose of a decrease in nitrogen oxides (NOx) in exhaust gas generated with the combustion of fuel, and the improvement of fuel consumption at partial load, a system of exhaust gas recirculation (EGR) is utilized (Patent Document 1), but organic acids are generated due to acidic components and moisture contained in exhaust gas, and the influence on sealing members used in parts of the same system is a concern.

Accordingly, it is an object of the present invention to provide a fluororubber composition and a crosslinked fluororubber product excellent in organic acid resistance.

Other objects of the present invention will become apparent from the following description.

### MEANS FOR SOLVING PROBLEM

The above objects are achieved by the following inventions.

1. A fluororubber composition comprising substantially no oxide of a divalent metal, hydroxide of a divalent metal, or carbonate of a divalent metal,
   and comprising graphite having an average particle diameter of 4 µm to 20 µm or a pitch-based carbon fiber having an average fiber length of 0.04 to 0.15 mm,
   as a filler
   in a peroxide-crosslinkable fluororubber.
2. The fluororubber composition according to 1, comprising the graphite in the range of 5 phr by weight to 50 phr by weight, or comprising the pitch-based carbon fiber in the range of 5 phr by weight to 50 phr by weight, per 100 phr by weight of the fluororubber.
3. The fluororubber composition according to 1 or 2, used as a sealing material.
4. A crosslinked fluororubber product obtained by crosslinking the fluororubber composition according to any of 1 to 3.

### EFFECT OF THE INVENTION

According to the present invention, the effect of being able to provide a fluororubber composition and a crosslinked fluororubber product excellent in organic acid resistance is obtained.

### DESCRIPTION OF THE PREFERRED EMBODIMENTS

Embodiments of the present invention will be described below.

One feature of the fluororubber composition of the present invention is that it comprises substantially no oxide of a divalent metal, hydroxide of a divalent metal, or carbonate of a divalent metal, and comprises graphite having an average particle diameter of 4 µm to 20 µm or a pitch-based carbon fiber having an average fiber length of 0.04 to 0.15 mm, as a filler in a peroxide-crosslinkable fluororubber.

According to the fluororubber composition of the present invention, the effect of excellent organic acid resistance is obtained. Due to excellent organic acid resistance, excessive swelling due to organic acids, and the roughness of the rubber surface, are suppressed. Therefore, when the fluororubber composition of the present invention is used, for example, for a sealing member, the sealing function can be extended and maintained, which can contribute to longer life of equipment.

As the peroxide-crosslinkable fluororubber (polymer), for example, binary fluororubbers such as vinylidene fluoride/hexafluoropropylene copolymers and vinylidene fluoride/tetrafluoroethylene copolymers, and ternary fluororubbers such as vinylidene fluoride/hexafluoropropylene/tetrafluoroethylene copolymers can be used.

The fluorine content of the fluororubber is preferably in the range of 63% by weight to 72% by weight.

The Mooney viscosity ML₁₊₁₀ (121°C) (in accordance with JIS K 6300-1) of the fluororubber is preferably in the range of 10 to 120.

Such a fluororubber is also available as a commercial product. Examples thereof can include "DAI-EL G-801" manufactured by Daikin Industries, Ltd.

The fluororubber composition of the present invention has one feature in the formulation of the filler, and comprises substantially no oxide of a divalent metal, hydroxide of a divalent metal, or carbonate of a divalent metal and comprises graphite having an average particle diameter of 4 µm to 20 µm or a pitch-based carbon fiber having an average fiber length of 0.04 to 0.15 mm as described above.

First, the graphite having an average particle diameter of 4 µm to 20 µm will be described.

It is preferred that flake graphite or synthetic graphite is used as the graphite having an average particle diameter of 4 µm to 20 µm. By using flake graphite or synthetic graphite, the effect of the present invention is more significantly exhibited.

The average particle diameter of the graphite is an average diameter obtained by measuring from an electron micrograph and calculating by the arithmetic mean. When the average particle diameter of the graphite is in the above range, good sealing performance is obtained.

Such graphite is also available as a commercial product. Examples of the flake graphite can include "CPB-6S" manufactured by Chuetsu Graphite Works Co., Ltd. Examples of the synthetic graphite can include "G-6S" manufactured by Chuetsu Graphite Works Co., Ltd.

Next, the pitch-based carbon fiber having an average fiber length of 0.04 to 0.15 mm will be described.

The average fiber length of the pitch-based carbon fiber is a value obtained by the arithmetic mean after measuring from an electron micrograph.

When the average fiber length of the pitch-based carbon fiber is in the range of 0.04 mm to 0.15 mm, good sealing performance is obtained.

The pitch-based carbon fiber can be produced, for example, by refining, reforming, and heat-treating coal tar pitch, petroleum pitch, or the like to obtain spinning pitch, and spinning the spinning pitch followed by infusibilization and then carbonization and graphitization at predetermined temperatures.

Such a pitch-based carbon fiber is also available as a commercial product. Examples thereof can include "DONACARBO S2404N" and "DONACARBO S-241" manufactured by Osaka Gas Chemicals Co., Ltd.

Next, preferred amounts of the graphite having an average particle diameter of 4 µm to 20 µm and the pitch-based carbon fiber having an average fiber length of 0.04 to 0.15 mm described above will be described.

When the fluororubber composition comprises the graphite having an average particle diameter of 4 µm to 20 µm, the amount of the graphite is preferably in the range of 5 phr by weight to 50 phr by weight, further preferably in the range of 8 phr by weight to 30 phr by weight, per 100 phr by weight of the fluororubber. By setting the amount in the above range, the effect of the present invention is more significantly exhibited.

When the fluororubber composition comprises the pitch-based carbon fiber having an average fiber length of 0.04 to 0.15 mm, the amount of the pitch-based carbon fiber is preferably in the range of 5 phr by weight to 50 phr by weight, further preferably in the range of 8 phr by weight to 30 phr by weight, per 100 phr by weight of the fluororubber. By setting the amount in the above range, the effect of the present invention is more significantly exhibited.

As described above, the fluororubber composition of the present invention comprises substantially no oxide of a divalent metal, hydroxide of a divalent metal, or carbonate of a divalent metal as a filler. Here, "comprises substantially no" specifically means that the total content of an oxide of a divalent metal, a hydroxide of a divalent metal and a carbonate of a divalent metal is 0.1 phr by weight or less, preferably 0.05 phr by weight or less, per 100 phr by weight of the fluororubber.

Examples of the oxide of a divalent metal include magnesium oxide and zinc oxide. Examples of the hydroxide of a divalent metal include calcium hydroxide. Examples of the carbonate of a divalent metal include calcium carbonate.

When the fluororubber composition comprises no oxide of a divalent metal, hydroxide of a divalent metal, or carbonate of a divalent metal as a filler, the effect of the present invention is significantly exhibited.

When the fluororubber composition of the present invention is crosslinked, peroxide crosslinking can be preferably used.

Preferred examples of the crosslinking agent that forms peroxide crosslinking can include organic peroxides. For example, dicumyl peroxide, cumene hydroperoxide, p-methane hydroperoxide, 2,5-dimethylhexane-2,5-dihydroperoxide, ditertiary butyl peroxide, benzoyl peroxide, m-toluyl peroxide, 2,5-dimethyl-2,5-di(tertiary butylperoxy)hexane, 2,5-dimethyl-2,5-di(tertiary butylperoxy)hexyne-3, 1,3-di(tertiary butylperoxyisopropyl)benzene, 2,5-dimethyl-2,5-dibenzoylperoxyhexane, (1,1,3,3-tetramethylbutylperoxy)2-ethylhexanoate, tertiary butyl peroxybenzoate, tertiary butyl peroxylaurate, di(tertiary butylperoxy)adipate, di(2-ethoxyethylperoxy)dicarbonate, or bis-(4-tertiary butylcyclohexylperoxy)dicarbonate is preferably used in the proportion of 0.5 to 10 phr by weight, more preferably 1 to 5 phr by weight, per 100 phr by weight of the fluororubber.

In peroxide crosslinking with an organic peroxide, a polyfunctional unsaturated compound is preferably used in combination. As such a polyfunctional unsaturated compound, a polyfunctional unsaturated compound that improves mechanical strength, compression set, and the like, such as tri(meth)allyl isocyanurate, tri(meth)allyl cyanurate, triallyl trimellitate, N,N'-m-phenylenebismaleimide, diallyl phthalate, tris(diallylamine)-s-triazine, triallyl phosphite, ethylene glycol di(meth)acrylate, diethylene glycol di(meth)acrylate, neopentyl glycol di(meth)acrylate, trimethylolpropane tri(meth)acrylate, or 1,3-polybutadiene, is preferably used in the proportion of about 0.1 to 20 phr by weight, more preferably about 0.5 to 10 phr by weight, per 100 phr by weight of the fluororubber. Here, (meth)allyl refers to allyl or methallyl. Similarly, (meth)acrylate refers to acrylate or methacrylate.

For the preparation of the composition, in addition to the above compounding components, compounding agents generally used as compounding agents for a rubber, for example, a filler, a reinforcing agent, and a processing aid, are appropriately mixed in a range that does not inhibit the effect of the present invention, and then the mixture is kneaded using a closed kneading apparatus such as an intermix, a kneader, or a Banbury mixer, or an open roll mill, and formed into a sheet shape to obtain a rubber green stock, and the rubber green stock is crosslinked and formed into a predetermined shape using a crosslinking press. The crosslinking is generally performed by press crosslinking (primary crosslinking) performed at about 100 to 250°C for about 1 to 120 minutes and oven crosslinking (secondary crosslinking) performed at about 150 to 250°C for about 0 to 30 hours.

The fluororubber composition of the present invention is preferably used as a sealing material from the viewpoint of significantly exhibiting the effect of the present invention. Particularly, the crosslinked fluororubber product of the present invention peroxide-crosslinked is preferably used as a sealing member.

Specifically, the crosslinked fluororubber product of the present invention peroxide-crosslinked can be used as a sealing member such as an oil sealing, an O-ring, or a packing in a wide range of fields of, for example, automobiles and industrial machines, and stable sealing properties can be maintained, particularly in an environment in which the crosslinked fluororubber product of the present invention peroxide-crosslinked can be exposed to organic acids.

### EXAMPLES

The present invention will be described below based on Examples, but the present invention is not limited by such Examples.

### (Example 1)

100 phr by weight of a fluororubber ("DAI-EL G-801" manufactured by Daikin Industries, Ltd.; vinylidene fluoride/hexafluoropropylene copolymer), 15 phr by weight of flake graphite ("graphite CPB-6S" (average particle diameter: 15 µm) manufactured by Chuetsu Graphite Works Co., Ltd.), 1 phr by weight of a crosslinking agent ("PERHEXA 25B" manufactured by NOF CORPORATION), and 3 phr by weight of triallyl isocyanurate ("TAIC" manufactured by Nippon Kasei Chemical Company Limited) were kneaded using a closed kneader and an open roll mill, to make an uncrosslinked rubber.

Next, the uncrosslinked rubber was subjected to press crosslinking (primary crosslinking) at 180°C for 6 minutes and then held (secondary crosslinking) under an atmosphere of 200°C for 15 hours to make a sheet (test piece) having a thickness of 2 mm and consisting of a crosslinked rubber.

### (Example 2)

A test piece was made as in Example 1 except that 15 phr by weight of synthetic graphite ("graphite G-6S" (average particle diameter: 6 µm) manufactured by Chuetsu Graphite Works Co., Ltd.) was used instead of the flake graphite in Example 1.

### (Example 3)

A test piece was made as in Example 1 except that 15 phr by weight of a pitch-based carbon fiber ("DONACARBO S2404N" (average fiber length: 0.04 mm) manufactured by Osaka Gas Chemicals Co., Ltd.) was used instead of the flake graphite in Example 1.

### (Example 4)

A test piece was made as in Example 1 except that 15 phr by weight of a pitch-based carbon fiber ("DONACARBO S-241" (average fiber length: 0.13 mm) manufactured by Osaka Gas Chemicals Co., Ltd.) was used instead of the flake graphite in Example 1.

### (Comparative Example 1)

A test piece was made as in Example 1 except that 15 phr by weight of magnesium oxide ("KYOWAMAG 150" manufactured by Kyowa Chemical Industry Co., Ltd.) was used instead of the flake graphite in Example 1.

### (Comparative Example 2)

A test piece was made as in Example 1 except that 15 phr by weight of calcium hydroxide ("Caldic 2000" manufactured by Ohmi Chemical Industry Co., Ltd.) was used instead of the flake graphite in Example 1.

### (Comparative Example 3)

A test piece was made as in Example 1 except that 15 phr by weight of calcium carbonate ("HAKUENKA CC" manufactured by SHIRAISHI CALCIUM KAISHA, LTD.) was used instead of the flake graphite in Example 1.

### (Comparative Example 4)

A test piece was made as in Example 1 except that 15 phr by weight of zinc oxide ("zinc white" manufactured by Sakai Chemical Industry Co., Ltd.) was used instead of the flake graphite in Example 1.

### <Method for Evaluating Organic Acid Resistance>

Each of the test pieces obtained in Examples and Comparative Examples was immersed in a 2 wt% acetic acid aqueous solution at a test temperature of 60°C for 72 hours, and from the volume change rate and appearance of each test piece after the immersion, the organic acid resistance was evaluated according to the following evaluation criteria. The volume change rate was measured in accordance with JIS K6258: 2003.

### <Evaluation Criteria>

A: Surface roughness does not occur, and the volume change rate is 20% or less.
B: Surface roughness occurs, and the volume change rate is more than 20%.

The above results are shown in Table 1.

**[Table 1]**

| Material | Example 1 | Example 2 | Example 3 | Example 4 | Comparative Example 1 | Comparative Example 2 | Comparative Example 3 | Comparative Example 4 |
|---|---|---|---|---|---|---|---|---|
| Fluororubber | 100 | 100 | 100 | 100 | 100 | 100 | 100 | 100 |
| Flake graphite | 15 | | | | | | | |
| Synthetic graphite | | 15 | | | | | | |
| Pitch-based carbon fiber (average fiber length: 0.04mm) | | | 15 | | | | | |
| Pitch-based carbon fiber (average fiber length: 0.13mm) | | | | 15 | | | | |
| Magnesium oxide | | | | | 15 | | | |
| Calcium hydroxide | | | | | | 15 | | |
| Calcium carbonate | | | | | | | 15 | |
| Zinc oxide | | | | | | | | 15 |
| Crosslinking agent | 1 | 1 | 1 | 1 | 1 | 1 | 1 | 1 |
| Triallyl isocyanurate | 3 | 3 | 3 | 3 | 3 | 3 | 3 | 3 |
| Organic acid resistance | A | A | A | A | B | B | B | B |

### <Evaluation>

From Table 1, it is seen that according to the fluororubber compositions of the present invention (Examples 1 to 4), the effect of excellent organic acid resistance is obtained.

## Claims

1. A fluororubber composition comprising substantially no oxide of a divalent metal, hydroxide of a divalent metal, or carbonate of a divalent metal,
and comprising graphite having an average particle diameter of 4 µm to 20 µm or a pitch-based carbon fiber having an average fiber length of 0.04 to 0.15 mm,
as a filler
in a peroxide-crosslinkable fluororubber.

2. The fluororubber composition according to claim 1, comprising the graphite in the range of 5 phr by weight to 50 phr by weight, or comprising the pitch-based carbon fiber in the range of 5 phr by weight to 50 phr by weight, per 100 phr by weight of the fluororubber.

3. The fluororubber composition according to claim 1 or 2, used as a sealing material.

4. A crosslinked fluororubber product obtained by crosslinking the fluororubber composition according to any of claims 1 to 3.
